# EUROPÄISCHE PATENTANMELDUNG

(11) **EP 1 985 570 A2**
(43) Veröffentlichungstag der Anmeldung: **29.10.2008**
(21) Anmeldenummer: 08102983.7
(22) Anmeldetag: 27.03.2008
(51) Int. Cl.: B66B 13/26, G05B 19/04

(54) **Verfahren zum Steuern eines elektrischen Türantriebes**

(30) Priorität: 26.04.2007 DE 102007019798
(71) Anmelder: SIEMENS AKTIENGESELLSCHAFT, 80333 München (DE)
(72) Erfinder: Sonntag, Guido, 30989 Gehrden (DE); Ludwig, Heinz, 30823 Garbsen (DE); Wilken, Hans-Wilhelm, 31139 Hildesheim (DE)

(57) **Zusammenfassung**

Die Erfindung betrifft ein Verfahren zum Steuern eines elektrischen Türantriebes durch das bei einer durch eine Behinderung des Türantriebes verursachten Überschreitung des maximalen Drehmomentes und/ oder einer Unterschreitung einer festgelegten Soll- Schließgeschwindigkeit der Tür eine Abschaltung des Türantriebes erfolgt. Um bei einem Funktionsausfall der Sicherheitssteuerung Verletzungen und Schäden an Personen und Gegenständen sicher zu verhindern und um ein Blockieren oder Reversieren der Tür trotzdem sicher zu stellen, wird vorgeschlagen, zur redundanten Hinderniserkennen eine Impulsüberwachung des Türantriebes durchzuführen.

## Beschreibung

Die Erfindung betrifft ein Verfahren zum Steuern eines elektrischen Türantriebes, bei dem während eines Einlesevorganges der zeitliche Verlauf des Antriebsdrehmomentes des Türantriebes bestimmt und daraus maximal zulässige Drehmomente für den Öffnungs- und Schließvorganges abgeleitet werden, die mit beim Betrieb auftretenden aktuellen Drehmomenten verglichen werden, wobei bei einer durch eine Behinderung des Türantriebes verursachten Überschreitung des maximalen Drehmomentes und/ oder einer Unterschreitung einer festgelegten Soll-Schließgeschwindigkeit der Tür eine Abschaltung des Türantriebes erfolgt.

Derartige Verfahren sind bekannt und werden bei Türantrieben, beispielsweise von Aufzugtüren eingesetzt. Wenn im Folgenden stets der Begriff Tür verwendet wird, so sind damit jegliche Art von Türen und Toren umfasst, ohne dass im Text ausdrücklich darauf hingewiesen wird. Verfahren der gattungsgemäßen Art werden angewandt, um, vor allem beim Schließen der Tür, sicherzustellen, dass im Schließbereich befindliche Personen nicht verletzt und/oder Gegenstände beschädigt werden. Deshalb werden die Antriebe so gesteuert, dass bei einem Blockieren oder Behindern der Tür durch ein Hindernis der oder die Antriebsmotoren so rechtzeitig gestoppt werden, dass Verletzungen und Beschädigungen nicht entstehen können.

Es ist, beispielsweise aus der DE 196 28 238 C2 bekannt, den Türantrieb über eine so genannte Kraftabschaltung außer Betrieb zu setzen. Dazu wird während eines Messdurchlaufes die zum Schließen der Tür erforderlich Schließkraft über den Schließweg gemessen und abgespeichert. Das Messen der Schließkraft erfolgt gewöhnlich durch Bestimmung der erforderlichen Drehmomente des elektrischen Türantriebsmotors während mindestens eines Messvorganges mit festgelegter Schließgeschwindigkeit, so dass aus den Messwerten der Kraft- und der Geschwindigkeitsverlauf der Tür während der Schließ- und Öffnungsbewegung ermittelt werden kann. Aus den Messwerten kann an jeder Stelle des Schließweges der Tür das zum Schließen der Tür erforderliche und maximal zulässige Schließmoment bestimmt werden, dessen Überschreiten im Betrieb zum Abschalten des Türantriebsmotors führt.

Aus verständlichen Gründen ist man bemüht, die Ansprechzeiten der Türantriebsmotorabschaltung so kurz wie möglich zu halten, um im Fall einer Blockierung der Tür die Schließkraft sofort auf Null zu setzen und ggf. ein Reversieren der Türschließbewegung einzuleiten. Die Bewegungsvorgänge der Tür laufen nicht mit gleichförmiger Geschwindigkeit ab, vielmehr sind Beschleunigungs- und Abbremsvorgänge beim Beginn und am Ende der Schließ- und Öffnungsbewegung die Regel.

Der Geschwindigkeitsverlauf beim Schließen der Tür lässt sich ebenfalls mit Hilfe von Messdurchläufen ermitteln und in den Speicher der Türsteuerung einlesen. Abweichungen vom gespeicherten Geschwindigkeitsverlauf während des Türbetriebes können ein Indiz für eine Störung, z. B. eine Blockierungen der Türschließbewegung, sein.

Ein Abgleich von Motordrehmoment (Stromaufnahme) und Geschwindigkeit der Schließfahrt kann dabei genauere Ergebnisse vermitteln, als die bloße Überwachung der Schließkraft der Tür und dadurch sicherstellen, dass normale Schwankungen des Motordrehmomentes, etwa bei Verschmutzung der Türführungen, erkannt und berücksichtigt werden, ohne sofort zum Abschalten des Antriebes zu führen.

Da Türsteuerungen der beschriebenen Art im Fall von Funktionsstörungen bei vorliegender Hindernisblockierung stets eine erhebliche Gefahr, insbesondere für Personen, die sich im Schließbereich der Tür aufhalten, darstellen, sollte sichergestellt werden, dass bei einem Funktionsausfall der Sicherheitssteuerung, gleich welcher Art, ein redundantes System vorhanden ist, das Verletzungen und Schäden an Personen und Gegenständen sicher verhindert.

Der Erfindung liegt, ausgehend von den beschriebenen Problemen, die Aufgabe zu Grunde, die bekannte Türsteuerung so zu verbessern, dass bei einem Funktionsausfall einer vorhandenen Hinderniserkennung während des Schließvorganges der Tür ein Blockieren oder Reversieren der Tür trotzdem sichergestellt ist und somit jeglicher Schaden abgewendet werden kann.

Zur Lösung der Aufgabe wird erfindungsgemäß ein verbessertes Verfahren zur Steuerung eines elektrischen Türantriebes vorgeschlagen, bei dem zur redundanten Hinderniserkennen eine Impulsüberwachung des Türantriebes über einen Zeitraum durchgeführt wird. Auf einfache Weise wird nicht nur die Ansprechzeit der Steuerung verkürzt, sondern es wird ein zusätzliches Sicherheitssystem geschaffen, dass beim Ausfall des oder der anderen Systeme dessen bzw. deren Funktion übernimmt. Über die Überwachung der Impulse des Türantriebsmotors kann, ein Hindernis in der Tür schnell erkannt und der Motor abgeschaltet oder reversiert werden, bevor es zu einem Schaden oder zu einer Verletzung kommen kann.

Vorzugsweise ist vorgesehen, dass zur Impulsüberwachung des Türantriebes der Türantriebsmotor mit einem Inkrementalgeber versehen ist, der bei Überschreitung eines festgelegten Zeitabstandes, zwischen den vom Encoder des Inkrementalgebers eingelesenen Inkrementen, ein Signal zur Abschaltung und/oder zum Reversieren des Türantriebsmotors auslöst. Solche Inkrementalgeber können magnetisch oder photoelektrisch sein. Entsprechend den vorgegebenen Geschwindigkeitsverläufen beim Schließen der Tür sind die Zeitabstände zwischen den vom Encoder eingelesenen Inkrementen bekannt. Überschreiten die Zeitabstände zwischen den eingelesenen Inkrementen festgelegte Werte oder erfasst der Encoder gar keine Inkremente, so ist das ein Indiz für ein Hindernis im Schließweg der Tür, das zur Sicherheitsabschaltung des Türantriebes führt.

Um ein unerwünschtes Abschalten des Türantriebes zu vermeiden, ist erfindungsgemäß außerdem vorgesehen, dass der Türantriebsmotor nur abschaltet, wenn gleichzeitig die folgenden Bedingungen gegeben sind,
o eine Schließ- oder Öffnungsanforderung der Tür liegt vor,
o die Tür befindet sich außerhalb ihrer Endpositionen und
o innerhalb einer festgelegten Zeit werden keine Inkremente vom Encoder des Inkrementalgebers erfasst.

Auf diese Weise wird sichergestellt, dass nur solche Hindernisse erkannt werden, die beim eigentlichen Betrieb, d.h. Öffnen und Schließen, auftreten. Es werden beispielweise keine Signale erfasst, die in den Türendstellungen entstehen, wo naturgemäß ebenfalls der Motor still steht und keine Inkremente erfasst werden können.

Nach einem weiteren Merkmal der Erfindung ist vorgesehen, dass der Türantriebsmotor abschaltet, sobald innerhalb einer einstellbaren Zeit von 100ms bis 300ms vom Encoder keine Inkremente erfasst werden. Die Zeitspanne, bei der ein Abschaltsignal an den Türantriebsmotor ausgelöst wird, ist einstellbar und kann den Bedürfnissen vor Ort angepasst werden.

Vorzugsweise ist die über die Impulsüberwachung veranlasste Abschaltung des Türantriebsmotors der Abschaltung über das Türantriebsmoment unterlagert. Damit ist ein echtes redundantes System geschaffen, das beim Ausfall der üblichen Türsteuerung eingreift und die ausgefallene Steuerung, die z. B. über das Motordrehmoment bzw. die Stromaufnahme des Türantriebsmotors hätte erfolgen sollen, ersetzt.

Die Erfindung schafft in einfacher Weise eine doppelte Sicherheit zur Erkennung eines Hindernisses mit Hilfe der unterlagerten Impulsüberwachung. Falls die Tür ein Hindernis über die Bedingungen der Motorstrom- und Geschwindigkeitsüberwachung nicht erkennt, wird es spätestens nach einer einstellbaren Zeit über die Bedingungen der Impulsüberwachung erfasst, so dass die Türsteuerung in jedem Fall den Motor stoppen oder reversieren kann.

Das Verfahren nach der Erfindung wird anhand einer Zeichnungsfigur erläutert, die ein Geschwindigkeits-Weg-Diagramm der Schließ- und Öffnungsbewegung einer erfindungsgemäßen Tür in einem Kartesischen Koordinatensystem zeigt. Auf der Ordinate ist die Geschwindigkeit v, auf der Abszisse ist der Weg s aufgetragen, mit bzw. über den sich die Tür bewegt. Dementsprechend ergeben sich die Weg-Geschwindigkeitskurven 1 für den Öffnungsvorgang und 2 für den Schließvorgang der Tür.

Oberhalb der Abszisse ist die Geschwindigkeitskurve 1 für den Öffnungsvorgang der Tür aufgetragen, die von links nach rechts zu lesen ist. Erkennbar bewegt sich die Tür nach dem Anlaufen aus der Schließstellung 8 nach einer kurzen Beschleunigungsphase zunächst mit einer reduzierten Geschwindigkeit vₘᵢₙAUF über den Bereich A, in dem das Schwert geöffnet wird, um anschließend auf die eingestellte Türgeschwindigkeit vₘₐₓAUF beschleunigt zu werden. Die Beschleunigung ist, wie mit den gestrichelten und mit + und - bezeichneten Linien beidseitig der Beschleunigungsrampe 3 angedeutet, einstellbar. Gegen Ende des Verfahrweges mit der Geschwindigkeit vₘₐₓAUF schaltet der Türantrieb über eine ebenfalls einstellbare Verzögerungsrampe 4 erneut zurück auf die Schleichfahrt B mit der Geschwindigkeit vₘᵢₙAUF und beendet am Ende der Schleichfahrt B den Öffnungsvorgang in der Offenstellung der Tür bei 5.

Unterhalb der Abszisse ist der Schließvorgang der Tür dargestellt. Der Geschwindigkeitsverlauf 2 erfolgt jetzt von rechts nach links. Auch hier wird der Schließvorgang der Tür aus der Position 5 durch eine Schleichfahrt C mit der Geschwindigkeit vₘᵢₙZU eingeleitet, bevor über die einstellbare Beschleunigungsrampe 6 auf die Türschließgeschwindigkeit 2 vₘₐₓZU beschleunigt wird. Am Ende der Schließfahrt wird die Türgeschwindigkeit vₘₐₓZU zum Schließen des Schwertes über die Verzögerungsrampe 7 erneut auf eine Schleichfahrt D mit der Geschwindigkeit vₘᵢₙZU verzögert, an deren Ende die Schließbewegung nochmals bis zum Stillstand bei 8 verzögert wird.

In dem Bereich 9 zwischen dem Ende der Schleichfahrt C beim Schließen der Tür und dem Beginn der Schleichfahrt D zum Schließen des Schwertes am Ende der Türschließbewegung müssen im Fall einer Hinderniserkennung im Türschließweg die folgenden Bedingungen gegeben sein, um den Türantriebes über die Antriebsmotorstrom- und Geschwindigkeitsüberwachung abzuschalten:
- eine Schließ- oder Öffnungsanforderung der Tür liegt vor,
- der maximal erreichte Geschwindigkeitswert in der aktuellen Schließfahrt ist unterschritten,
- der nominale Geschwindigkeitswert an der aktuellen Position ist größer als der aktuelle,
- der gemessene Motorstrom ist größer als ein einstellbarer Strom-Grenzwert
- die Tür befindet sich außerhalb der Niedrig-Geschwindigkeitsstrecke.

In dem Bereich 10 unmittelbar zwischen den beiden Endpositionen der Tür müssen zum Abschalten des Türantriebes über den Inkrementalgeber die folgenden Bedingungen vorliegen:
- eine Schließ- oder Öffnungsanforderung der Tür liegt vor,
- die Tür befindet sich außerhalb ihrer Endpositionen und
- innerhalb einer festgelegten Zeit ( z.B. 100ms oder 300ms) werden keine Inkremente vom Encoder des Inkrementalgebers erfasst.

Wird also das Hindernis nicht über die ersten Bedingungen erkannt oder erfasst, greifen, ggf. nach einer zeitlichen Verzögerung, die zweiten Bedingung und der Antrieb wird mit Hilfe der Signalüberwachung am Antriebsmotor gestoppt oder reversiert. Das System erlaubt mithin die Erfassung aller möglichen Blockierungen, sowohl sanfte, wie auch schlagartige.

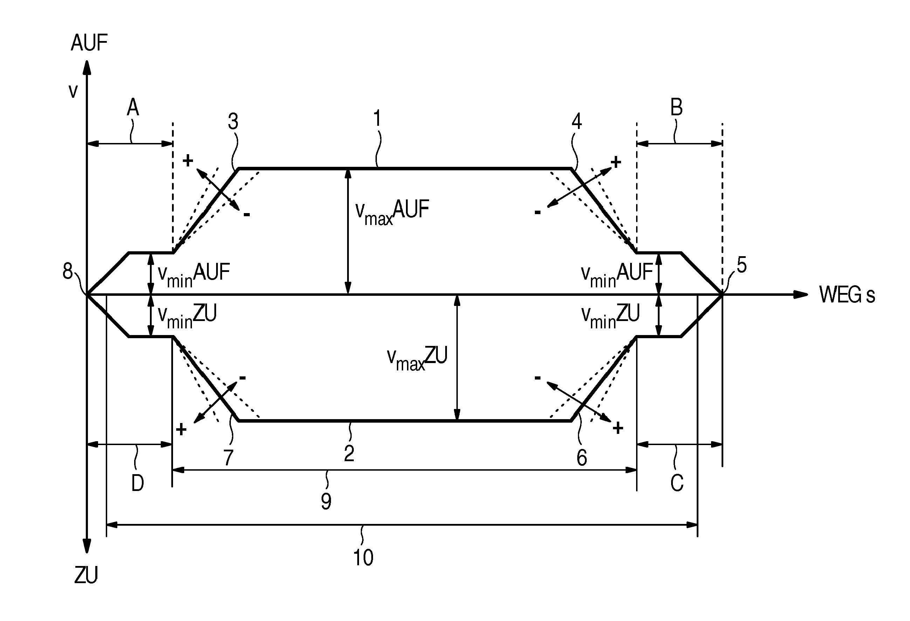

## Patentansprüche

1. Verfahren zum Steuern eines elektrischen Türantriebes, bei dem während eines Einlesevorganges der zeitliche Verlauf des Antriebsdrehmomentes des Türantriebes bestimmt und daraus maximal zulässige Drehmomente für den Öffnungs- und Schließvorganges abgeleitet werden, die mit beim Betrieb auftretenden aktuellen Drehmomenten verglichen werden, wobei bei einer durch eine Behinderung des Türantriebes verursachten Überschreitung des maximalen Drehmomentes und/ oder einer Unterschreitung einer festgelegten Soll-Schließgeschwindigkeit der Tür eine Abschaltung des Türantriebes erfolgt,
**dadurch gekennzeichnet, dass**
zur redundanten Hinderniserkennung eine Impulsüberwachung des Türantriebes über einen Zeitraum durchgeführt wird.

2. Verfahren zum Steuern eines elektrischen Türantriebes nach Anspruch 1,
**dadurch gekennzeichnet, dass**
zur Impulsüberwachung des Türantriebes der Türantriebsmotor mit einem Inkrementalgeber versehen ist, der bei Überschreitung eines festgelegten Zeitabstandes, zwischen den vom Encoder des Inkrementalgebers eingelesenen Inkremente, ein Signal zur Abschaltung und/oder zum Reversieren des Türantriebsmotors auslöst.

3. Verfahren zum Steuern eines elektrischen Türantriebes nach Anspruch 2,
**dadurch gekennzeichnet, dass**
der Türantriebsmotor abschaltet, wenn gleichzeitig die folgenden Bedingungen gegeben sind,
o dass eine Schließ- oder Öffnungsanforderung der Tür vorliegt,
o dass die Tür sich außerhalb ihrer Endpositionen befindet und
o dass innerhalb einer festgelegten Zeit keine Inkremente vom Encoder des Inkrementalgebers erfasst werden.

4. Verfahren zum Steuern eines elektrischen Türantriebes nach Anspruch 3,
**dadurch gekennzeichnet, dass**
der Türantriebsmotor abschaltet, sobald innerhalb einer einstellbaren Zeit von 100ms bis 300ms vom Encoder keine Inkremente erfasst werden

5. Verfahren zum Steuern eines elektrischen Türantriebes nach einem der Ansprüche 1 bis 4,
**dadurch gekennzeichnet, dass**
die über die Impulsüberwachung veranlasste Abschaltung des Türantriebsmotors der Abschaltung über das Türantriebsmoment unterlagert ist
